# EUROPÄISCHE PATENTSCHRIFT

(11) **EP 3 423 224 B1**
(45) Veröffentlichungstag und Bekanntmachung des Hinweises auf die Patenterteilung: **01.03.2023**
(21) Anmeldenummer: 17707576.9
(22) Anmeldetag: 02.03.2017
(51) Int. Cl.: B23B 51/04, B23B 31/00, B23B 31/113

(54) **ELEKTRISCHES HANDKERNBOHRGERÄT**
ELECTRICAL HAND-HELD CORE DRILLING MACHINE
OUTIL DE CAROTTAGE PORTATIF ELECTRIQUE

(30) Priorität: 03.03.2016 EP 16158453
(43) Veröffentlichungstag der Anmeldung: 09.01.2019
(73) Patentinhaber: Hilti Aktiengesellschaft, 9494 Schaan (LI)
(72) Erfinder: KOSLOWSKI, Oliver, 86932 Pürgen (DE); TAACK-TRAKRANEN, John Van, 81475 München (DE)
(74) Vertreter: Hilti Aktiengesellschaft Corporate Intellectual Property
(86) Internationale Anmeldenummer: PCT/EP2017/054865
(87) Internationale Veröffentlichungsnummer: WO 2017/149061

(56) Entgegenhaltungen:
- WO-A1-2005/014211
- CH-B1- 698 953
- DE-A1-102012 204 491

## Beschreibung

Die Erfindung betrifft ein elektrisches Handkernbohrgerät, eine Diamantbohrkrone sowie ein Handkernbohrsystem mit einem elektrischen Handkernbohrgerät und einer Diamantbohrkrone.

Ein aus dem Stand der Technik bekanntes elektrisches Handkernbohrgerät weist eine Werkzeugaufnahme zur Aufnahme einer Diamantbohrkrone auf, wobei die Werkzeugaufnahme eine Aufnahmehülse und ein darin angeordnetes Werkzeugaufnahmestück aufweist, das beim Betrieb des Handkernbohrgeräts um eine Rotationsachse in Betriebsdrehrichtung angetrieben wird, und mit einer Druckfederanordnung, die innerhalb der Aufnahmehülse angeordnet ist und die die Aufnahmehülse und das Werkzeugaufnahmestück federnd gegeneinander abstützt.

Die Aufnahmehülse weist eine zentrale Einstecköffnung auf, durch die hindurch ein Einsteckende der Diamantbohrkrone in das Werkzeugaufnahmestück eingeführt werden kann, wenn das Einsteckende bezüglich der Einstecköffnung in einer Einsteckdrehlage befindlich und die Druckfederanordnung druckbelastet ist.

Das Einsteckende ist in der zentralen Einstecköffnung gegen ein Herausziehen koaxial zur Rotationsachse gesichert, wenn das Einsteckende in dem Werkzeugaufnahmestück und bezüglich der Einstecköffnung in einer Sperrdrehlage befindlich ist und die Druckfederanordnung vergleichsweise weniger druckbelastet ist.

An der Aufnahmehülse entlang einer Umfangsrichtung der Einstecköffnung sind drei gleichmäßig voneinander beabstandete Haltelaschen ausgebildet, die jeweils eine Anschlagfläche aufweisen, die jeweils dem Werkzeugaufnahmestück zugewandt sind, wobei das Einsteckende, wenn dieses gegen ein Herausziehen koaxial zur Rotationsachse gesichert ist, mittels dreier am Einsteckende ausgebildeten Kontaktflächen an den Anschlagflächen anliegt.

Unter einer Einsteckdrehlage soll im Rahmen der vorliegenden Erfindung eine solche Drehlage des Einsteckendes, bezogen auf die Rotationsachse, zu verstehen sein in der die drei Halteriegel, die vorzugsweise gleichmäßig voneinander beabstandet entlang einer Umfangsrichtung des Einsteckendes am Einsteckende ausgebildet sind, an den Haltelaschen der Aufnahmehülse ungehindert in axialer Richtung in die zentrale Einstecköffnung hineingesteckt werden können.

Unter einer Sperrdrehlage ist wiederum eine, bezogen auf die Rotationsachse, zu der Einsteckdrehlagewinkel verdrehte Drehlage des Einsteckendes zu verstehen. In dieser Sperrdrehlage ist ein Herausziehen des Einsteckendes aus der Aufnahmehülse aufgrund der Halteriegel, deren Weg durch die Haltelaschen versperrt ist, unmöglich.

Beispielsweise offenbart die DE 10 2012 204 491 A1 ein Bohrwerkzeug, bei dem wenigstens eine erste von zwei Anlageflächen im Wesentlichen parallel zu einer Längsachse des Bohrwerkzeuges ausgebildet ist und die wenigstens eine erste Anlagefläche zur Übertragung des Drehmomentes dient.

Es ist Aufgabe der vorliegenden Erfindung ein elektrisches Handkernbohrgerät zu schaffen das einen schnellen Bohrkronenwechsel sowie einen verschleißarmen Betrieb begünstigt.

Diese Aufgabe wird mit den Merkmalen des Anspruchs 1 gelöst.

Die Erfindung schließt die Erkenntnis ein, dass durch die erfindungsgemäßen Zapfenflächen das durch die Werkzeugaufnahme übertragbare Drehmoment erhöht werden kann. Dies bei einer Federkraft von ungefähr 1600 N in einer Tellerfederanordnung.

Dadurch, dass sich erfindungsgemäß jede der drei Zapfenflächen in radialer Richtung höchstens halb so breit erstreckt wie eine jeweilige Anschlagfläche in radialer Richtung, wird gleichzeitig ein Verklemmen des Einsteckende im Werkzeugaufnahmestück weitestgehend verhindert.

Durch die erfindungsgemäß vorgesehenen Zapfenflächen erfolgt einer Entkopplung zwischen Drehmomentübertragung in Betriebsdrehrichtung und Federkraftwirkung der Druckfederanordnung entlang der Rotationsachse.

Erfindungsgemäß sind die Anschlagflächen flächig ausgebildet, so dass diese einen Gleitkontakt zu den korrespondierenden Kontaktflächen am Einsteckende bilden und somit, zumindest im Bereich der Anschlagflächen zwischen Aufnahmehülse und Einsteckende bei in Sperrdrehlage befindliche Einsteckende, ein rotatorischer Freiheitsgrad um die Rotationsachse ungesichert verbleibt.

Mit anderen Worten sind Einsteckende und Aufnahmehülse nicht über eine Verdrehsicherung im Bereich der Anschlagflächen zueinander drehgesichert. Wenn zumindest zwischen Aufnahmehülse und Einsteckende im Bereich der Anschlagflächen ein rotatorischer Freiheitsgrad um die Rotationsachse ungesichert verbleibt, schließt dies nicht aus, dass ein tatsächliches relatives Verdrehen zwischen Aufnahmehülse und Einsteckende bei Drehung in Betriebsdrehrichtung gesichert ist. Tatsächlich ist dies für die Drehmomentübertragung zwischen Werkzeugaufnahmestück und Einsteckende erforderlich.

Dadurch, dass zumindest zwischen Aufnahmehülse und Einsteckende im Bereich der Anschlagflächen bei in Sperrdrehlage befindliche Einsteckende vorzugsweise ein rotatorischer Freiheitsgrad um die Rotationsachse ungesichert verbleibt, wird ein für das Entfernen der Diamantbohrkrone unerwünschtes Verhaften von Einsteckende und Aufnahmehülse vermieden. Dadurch dass in diesem Ausführungsbeispiel sowohl die Anschlagflächen als auch die korrespondierenden Kontaktflächen frei von Rastmitteln oder dergleichen ausgestaltet sind, wird eine unerwünschte Anlagerung von Baustaub, die zu einem solchen Verhaften führen kann, weitestgehend vermieden.

Es ist vorgesehen, dass die Zapfen jeweils ein Plateau aufweisen, das von der Anschlagfläche beabstandet ist. Eine jeweilige Flächennormale des Plateaus ist parallel zur Rotationsachse orientiert, wobei eine jeweilige Zapfenfläche senkrecht zu dem jeweiligen Plateau steht und eine Zapfenspitze begrenzt. Eine Zapfenspitze erstreckt sich ausgehend vom Plateau in Richtung der jeweiligen Haltelasche.

Es hat sich als vorteilhaft herausgestellt, wenn sich die Zapfenspitze, entlang eines der Rotationsachse am nächsten gelegenen Umfangsabschnitts des Zapfens über wenigstens ein Drittel des Plateaus erstreckt. Vorzugsweise erstreckt sich die Zapfenspitze über höchstens zwei Drittel des Plateaus entlang des der Rotationsachse am nächsten gelegenen Umfangsabschnitts des Zapfens.

In einer weiteren bevorzugten Ausgestaltung erstreckt sich eine jeweilige der drei Zapfenflächen in radialer Richtung höchstens halb so breit wie ein jeweiliges Plateau in radialer Richtung. Dies kann ein unerwünschtes Verklemmen des Einsteckendes im Werkzeugaufnahmestück bei einem drehmomentintensiven Betrieb deutlich robuster vermindern.

Es hat sich als vorteilhaft herausgestellt, wenn eine sich in radialer Richtung erstreckende Seitenwand eines jeweiligen Zapfens, die sich vorzugsweise zwischen einem jeweiligen Plateau und einer jeweiligen Auflagefläche erstreckt, um 30° zur Rotationsachse geneigt ist.

Es hat sich als vorteilhaft herausgestellt, dass die Druckfederanordnung, wenn das Einsteckende in dem Werkzeugaufnahmestück befindlich ist und bezüglich der Einstecköffnung in einer Sperrdrehlage befindlich ist, wobei die Druckfederanordnung eine Federkraft von ungefähr 1600 N zwischen auf das Werkzeugaufnahmestück ausübt.

Unter einem (höher) druckbelasteten Zustand der Druckfederanordnung soll der Zustand der Druckfederanordnung verstanden werden, bei der die Druckfederanordnung komprimiert ist. Dies ist der Fall, wenn die Aufnahmehülse in Richtung einer aufzunehmenden Diamantbohrkrone gedrückt wird um ein Einfädeln der am Einsteckende ausgebildeten drei Halteriegel an den Haltelaschen vorbei und durch die Einstecköffnung hindurch ermöglicht wird. Ein solches Vordrücken der Aufnahmehülse kann beispielsweise durch eine an einem Gehäuse des Handkernbohrgeräts vorgesehene Druckplatte mit zugehörigem Druckhebel realisiert sein.

Unter einem vergleichsweise weniger druckbelasteten Zustand der Druckfederanordnung soll ein solcher Zustand der Druckfederanordnung verstanden werden, bei dem die Druckfederanordnung im Vergleich zum komprimierten Zustand weniger komprimiert ist. Dies ist der Fall, wenn die Aufnahmehülse, bei eingestecktem Einsteckende, in ihrer Ursprungslage befindlich ist, in der kein äußerer Druck, beispielsweise durch eine Druckplatte des elektrischen Handkernbohrgeräts auf die Aufnahmehülse ausgeübt wird. In diesem Zustand werden die an den Haltelaschen ausgebildeten Anschlagflächen auf die korrespondierenden Kontaktflächen am Einsteckende einen Druck aus.

Es hat sich als vorteilhaft herausgestellt, wenn die Druckfederanordnung aus fünf in Reihe geschalteten Tellerfedern besteht. Vorzugsweise ergibt sich die Federkraft ungefähr 1600 N, die die Druckfederanordnung auf das Werkzeugaufnahmestück ausübt durch eine entsprechende Ersatzfederkonstante der fünf in Reihe geschalteten Tellerfedern bei einer vorgegebenen Auslenkung.

Es hat sich als vorteilhaft herausgestellt, wenn die Werkzeugaufnahme einen Dichtring bestehend aus einem elastisch verformbaren Kunststoff aufweist. Vorzugsweise weist der Kunststoff einer Shore-Härte von kleiner 25 auf. Dies kann etwaige Vorspannungsverluste beim Einspannen der Bohrkrone vermindern. Vorzugsweise ist der Dichtring innerhalb des Werkzeugaufnahmestücks angeordnet, besonders bevorzugt stützt sich der Dichtring gegen das Einsteckende ab, wenn dieses im Werkzeugaufnahmestück befindlich ist.

In einer weiteren bevorzugten Ausgestaltung ist an einer äußeren Oberfläche der Aufnahmehülse ein Rändel ausgebildet, dass die Aufnahmehülse ringförmig umläuft. Vorzugsweise bildet der Rändel genau einen geschlossenen Ring der sich, bezogen auf die Rotationsachse über wenigstens ein Drittel und höchstens zwei Drittel der Länge der Aufnahmehülse erstreckt.

Die Erfindung wird ebenfalls gelöst durch eine Diamantkrone mit den Merkmalen des Anspruchs 9.

Die Halteriegel können jeweils eine Kontaktfläche aufweisen, die zu einer Anschlagsfläche an den jeweiligen Haltelaschen korrespondiert. Besonders bevorzugt weist jeder der Halteriegel eine Gegenauflagefläche auf, deren Flächennormale die jeweils parallel zur Rotationsachse verläuft.

Vorzugsweise sind am Einsteckende entlang der Umfangsrichtung drei gleichmäßig voneinander beabstandete Zapfengegenflächen ausgebildet, die senkrecht zu den jeweiligen Gegenauflageflächen verlaufen können und die bevorzugt gegenüber einer Umfangsrandfläche des Halteriegels zurückgesetzt sind.

Besonders bevorzugt sind die Kontaktflächen flächig ausgebildet, so dass diese einen Gleitkontakt zu den korrespondierenden Anschlagflächen an den Haltelaschen bilden und somit, zumindest zwischen Aufnahmehülse und Einsteckende im Bereich der Kontaktflächen bei in Sperrdrehlage befindlichen Einsteckende, ein rotatorischer Freiheitsgrad um die Rotationsachse ungesichert verbleibt.

Die Diamantbohrkrone kann durch Merkmale, die bereits mit Bezug auf das Handkernbohrgerät beschrieben worden entsprechend weitergebildet sein.

Die Erfindung wird ebenfalls gelöst durch ein Handkernbohrsystem mit einem vorbeschrieben Handkernbohrgerät und einer vorbeschriebenen Diamantbohrkrone.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung einer erfindungsgemäßen Werkzeugaufnahme mit einem Einsteckende einer erfindungsgemäßen Diamantbohrkrone;
- Fig. 2: eine erste schematische Schnittdarstellung der erfindungsgemäßen Werkzeugaufnahme mit Druckfederanordnung im druckbelasteten Zustand;
- Fig. 3: eine zweite schematische Schnittdarstellung der erfindungsgemäßen Werkzeugaufnahme mit Druckfederanordnung im druckbelasteten Zustand;
- Fig. 4: eine dritte schematische Schnittdarstellung der erfindungsgemäßen Werkzeugaufnahme mit Druckfederanordnung im druckbelasteten Zustand;
- Fig. 5: eine perspektivische schematische Darstellung eines Werkzeugaufnahmestücks;
- Fig. 6: eine Detailansicht des Werkzeugaufnahmestücks;
- Fig. 7: eine schematische Darstellung der erfindungsgemäßen Diamantbohrkrone;
- Fig. 8: eine schematische Darstellung eines Einsteckendes der erfindungsgemäßen Diamantbohrkrone;
- Fig. 9: eine Seitenansicht des Einsteckendes der erfindungsgemäßen Diamantbohrkrone; und
- Fig. 10: eine Frontansicht des Einsteckendes der erfindungsgemäßen Diamantbohrkrone.

### Ausführungsbeispiel:

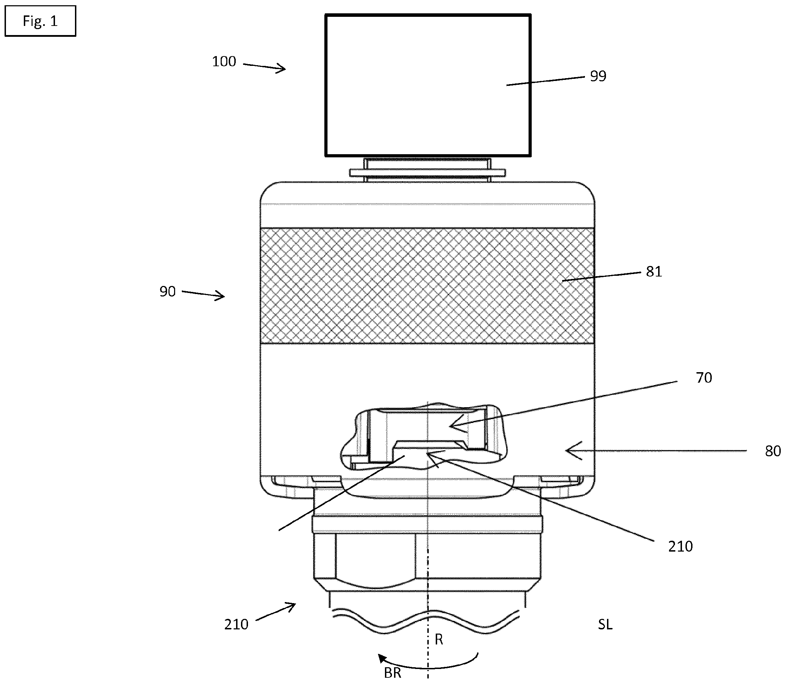

Fig. 1 zeigt eine Werkzeugaufnahme 90 eines hier nicht weiter dargestellten elektrischen Handkernbohrgeräts 100. Die Werkzeugaufnahme 90 weist eine zylinderförmige Aufnahmehülse 80 auf. In der Aufnahmehülse 80 ist eine Werkzeugaufnahmestück 70 angeordnet. Das Werkzeugaufnahmestück 70 dient der Aufnahme einer Diamantbohrkrone 200.

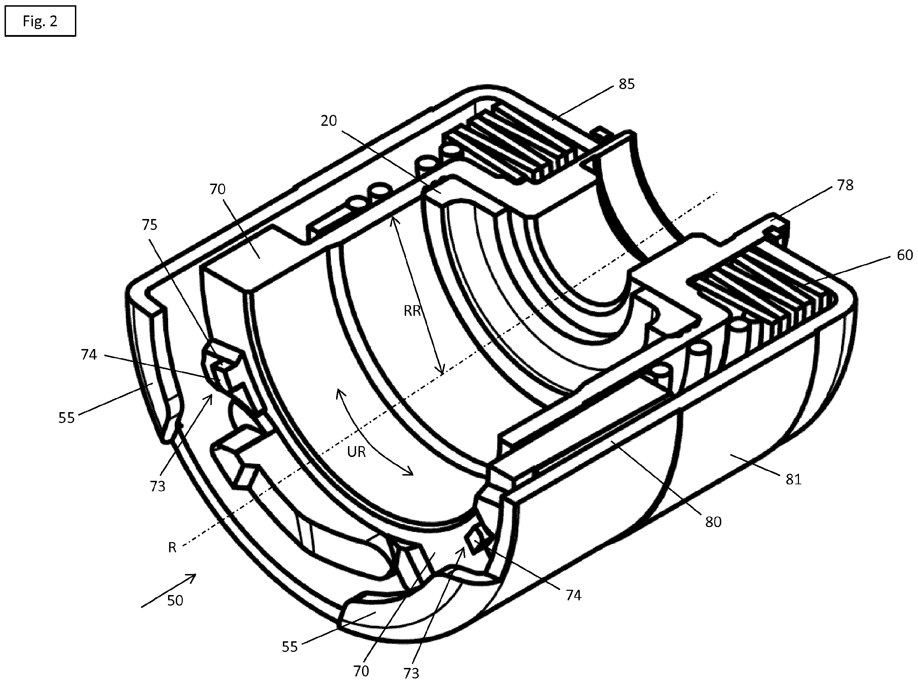

Das Werkzeugaufnahmestück 70 wird beim Betrieb des Handkernbohrgeräts 100 um eine Rotationsachse R in Betriebsdrehrichtung BR angetrieben (vgl. Fig. 2).

Innerhalb der Aufnahmehülse 80 ist eine Druckfederanordnung 60 angeordnet, die die Aufnahmehülse 80 und das Werkzeugaufnahmestück 70 federnd gegeneinander abstützt. Im Ausführungsbeispiel der Fig. 1 besteht die Druckfederanordnung 60 aus fünf in Reihe geschalteten Tellerfedern.

Die Aufnahmehülse 80 weist eine zentrale Einstecköffnung 50 auf, in Fig. 2 auf der linken Seite, durch die hindurch ein Einsteckende der Diamantbohrkrone in das Werkzeugaufnahmestück 70 eingeführt werden kann.

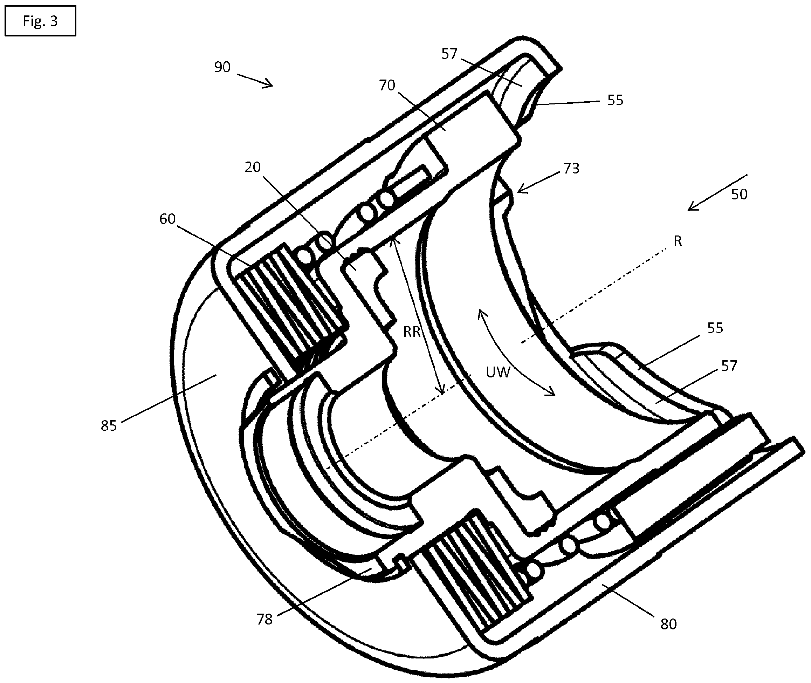

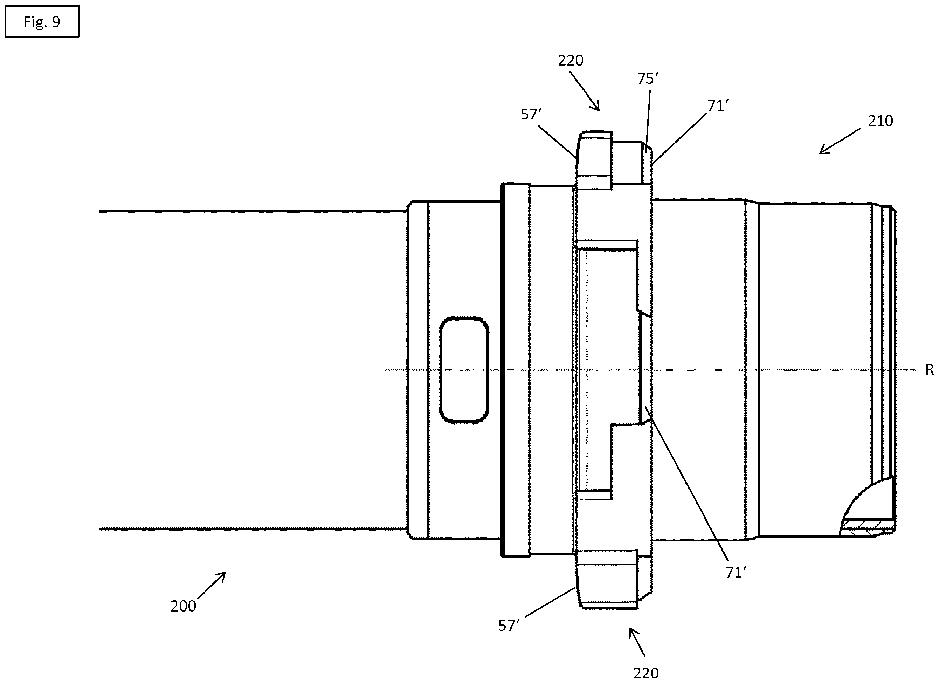

An der Aufnahmehülse 80 entlang einer Umfangsrichtung UR sind drei gleichmäßig voneinander beabstandete Haltelaschen 55 ausgebildet. Diese weisen jeweils eine Anschlagfläche 57 auf (vgl. auch Fig. 3), die jeweils dem Werkzeugaufnahmestück 70 zugewandt sind. Diese Anschlagsflächen 57 bilden Anschlagsflächen für korrespondierende Kontaktflächen 57`, die am Einsteckende 210 der Diamantbohrkrone 200 ausgebildet sind (vgl. Fig. 9).

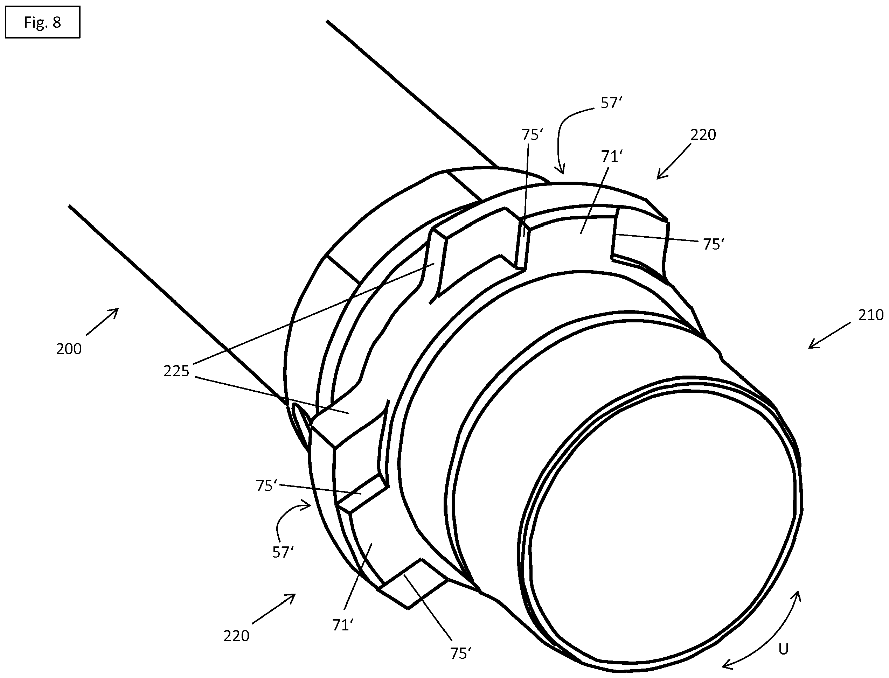

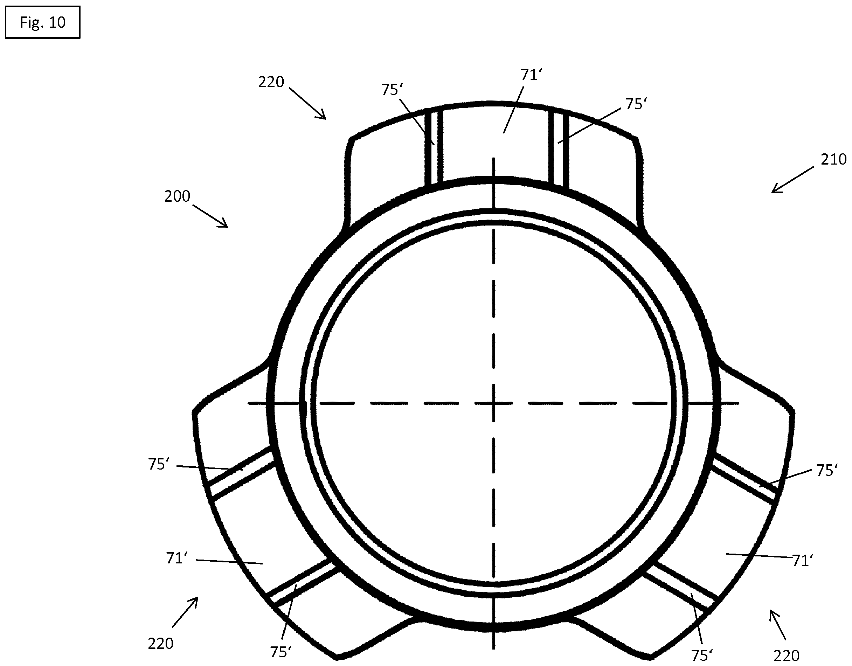

Entlang eines Umfangs UR des Werkzeugaufnahmestücks 70 sind genau drei gleichmäßig voneinander beabstandete Auflageflächen 71 am Werkzeugaufnahmestück 70 ausgebildet. Diese Auflageflächen 71 sind jeweils den Anschlagflächen 57 zugewandt. Die Auflageflächen 71 bilden ihrerseits einen, bezogen auf die Anschlagflächen 57, gegensinnig orientierten axialen Anschlag für das Einsteckende 210 genauer gesagt für am Einsteckende 210 ausgebildete Gegenauflageflächen 71' (vgl. Fig. 8, 9 und 10).

Von den Auflageflächen 71, die Auflageflächen 71 jeweils einseitig begrenzend, ragen genau drei gleichmäßig voneinander beabstandete Zapfen 73 ab. Aufgrund der Schnittdarstellung der Fig. 1 sind nur zwei der drei Zapfen 73 erkennbar. An diesen Zapfen 73 ist jeweils eine Zapfenfläche 75 ausgebildet, deren Flächennormale senkrecht zur Rotationsachse R und tangential zum Umfang U orientiert ist. Somit kann eine Drehmomentübertragung in Betriebsdrehrichtung BR vom Werkzeugaufnahmestück 70 auf das Einsteckende 210 (vgl. Fig. 1) ausschließlich durch Formschluss zwischen den drei Zapfenflächen 75 und dazu korrespondierenden Zapfengegenflächen 75' am Einsteckende 210 (vgl. Fig. 8) erfolgen.

Wie der Fig. 2, 3 und 5 entnommen werden kann, erstreckt sich jede der drei Zapfenflächen 75 in radialer Richtung RR höchstens halb so breit wie eine jeweilige Auflagefläche 71 in radialer Richtung RR. Dadurch kann sowohl eine formschlüssige Drehmomentübertragung zwischen den drei Zapfenflächen und dazu korrespondierenden Zapfengegenflächen 75` erfolgen und ein Verklemmen im Wesentlichen ausgeschlossen werden.

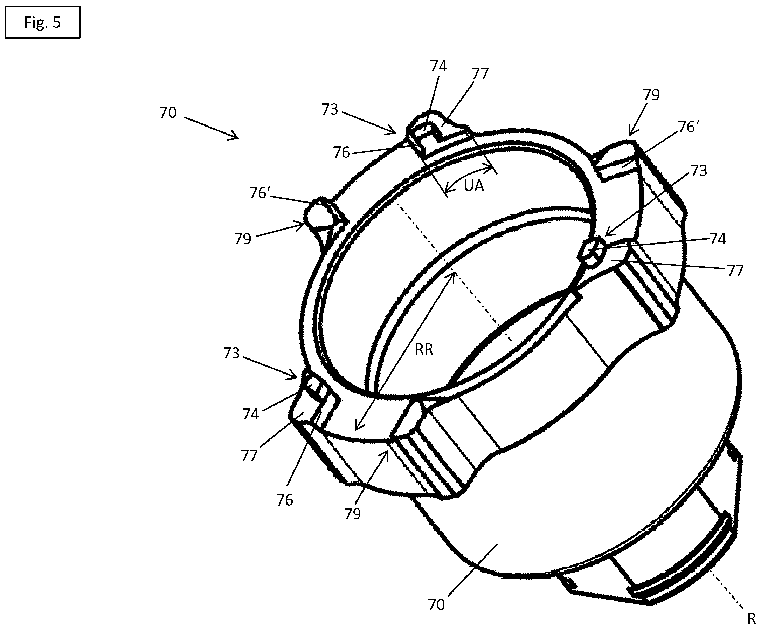

Wie ebenfalls der Fig. 5 entnommen werden kann, weist ein jeder der drei Zapfen 73 jeweils ein Plateau 77 auf, das von der Auflagefläche 71 beabstandet ist und dessen Flächennormale jeweils parallel zur Rotationsachse ist. Mit anderen Worten verlaufen die Plateaus 77 parallel und beabstandet von den Auflageflächen 71. Die für die formschlüssige Drehmomentübertragung zur Verfügung gestellten Zapfenflächen 75 bestehen jeweils senkrecht zum Plateau 77.

Die Zapfenfläche 75 begrenzt seitlich eine Zapfenspitze 74, die sich ausgehend vom Plateau 77 in Richtung der jeweiligen Haltelasche 55 erstreckt. Dabei erstreckt sich die Zapfenspitze 74, entlang eines der Rotationsachse R am nächsten gelegenen Umfangsabschnitts UA des Zapfens 73, über wenigstens ein Drittel und höchstens zwei Drittel des Plateaus 77.

Wie ebenfalls der Fig. 2 und 5 entnommen werden kann, erstreckt sich eine jeweilige der drei Zapfenflächen 75 in radialer Richtung RR höchstens halb so breit wie ein jeweiliges Plateau 71 in radialer Richtung RR.

An am jeweiligen Zapfen 73 ist eine Seitenwand 76 ausgebildet, die sich in radialer Richtung RR erstreckt. Diese Seitenwand 76 erstreckt sich zwischen einem jeweiligen Plateau 77 und einer jeweiligen Auflagefläche 71 und ist dabei um 30° zur Rotationsachse R geneigt.

Oberhalb der Rotationsachse R an dem Umfang UW des Werkzeugaufnahmestücks 70 ist, dem Zapfen 73 gegenüberliegend, ein Vorlaufzapfen 79 dargestellt. Dieser Vorlaufzapfen 79 weist seinerseits eine Seitenwand 76` auf, die sich in radialer Richtung RR erstreckt und die Auflagefläche 71 einseitig begrenzt. Dabei ist die Seitenwand 76` am Vorlaufzapfen 79 um ebenfalls um 30° zur Rotationsachse R geneigt. Wenn die Werkzeugaufnahme 90 in Betriebsrichtung BR rotiert, eilt der Vorlaufzapfen 79 dem Zapfen 73 voraus, wobei über den Vorlaufzapfen 79 kein Drehmoment auf die Diamantbohrkrone übertragen wird.

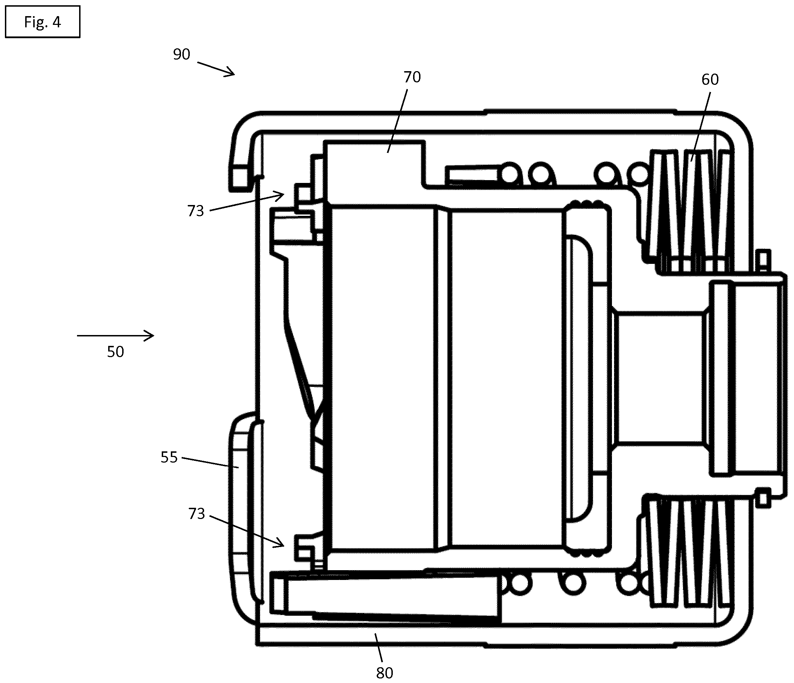

Die Druckfederanordnung 60, die im Ausführungsbeispiel der Fig. 2, 3 und 4 aus in fünf in Reihe geschalteten Tellerfedern besteht, übt eine Federkraft von ca. 1600 N auf das Werkzeugaufnahmestück 70 aus, wo dabei in Fig. 2, 3 und 4 der weniger druckbelastete Zustand der Druckfederanordnung gezeigt ist, was daran erkennbar ist, dass ein Hülsenrand 85 an der Aufnahmehülse 80 gegen einen korrespondierenden Stützkragen 78 am Werkzeugaufnahmestück 70 abgestützt ist.

In dem in Fig. 2, 3 und 4 gezeigten Zustand lässt sich entsprechend ein Einsteckende 210 nicht an den Haltelaschen 55 vorbei in das Werkzeugaufnahmestück 70 einfädeln. Dafür müsste nämlich die Aufnahmehülse 80 in Fig. 2, 3 und 4 nach links bewegt werden, so dass der Hülsenrand 85 und der Stützkragen 78 voneinander beabstandet sind und somit auch der Abstand zwischen Haltelaschen 55 und Auflageflächen 71 vergrößert ist, so dass am Einsteckende 210 ausgebildete Halteriegel 220 an den Haltelaschen 55 vorbei eingefädelt werden können. Dies ist nur möglich, wenn das Einsteckende in einer Einsteckdrehlage bezüglich der Rotationsachse R befindlich ist, d.h. die am Einsteckende 210 ausgebildeten Halteriegel 220 jeweils in axialer Richtung durch den Abstand, der durch jeweils zwei benachbarte Haltelaschen 55 ausgebildet ist, durchgesteckt werden kann.

Ein Einstecken ist nicht möglich, wenn das Einsteckende 210, bezogen auf die Rotationsachse R, in eine Sperrdrehlage verdreht ist, in diesem Fall wäre ein Einstecken des Einsteckendes 210 in das Werkstückaufnahmestück 70 unmöglich. Gleichzeitig wird aber, wenn das Einsteckende 210 in dem Werkzeugaufnahmestück 70 befindlich ist (vgl. Fig. 1) wie gewünscht ein axiales Herausziehen des Einsteckendes 210 aus dem Werkzeugaufnahmestück 70 verhindert.

Die Werkzeugaufnahme 90 der Fig. 2, 3 und 4 weist ebenfalls einen Dichtring 20 bestehend aus einem elastisch verformbaren Kunststoff mit einer Shore-Härte kleiner 25 auf. Wie der Fig. 2, 3 und 4 entnommen werden kann, ist der Dichtring 20 innerhalb des Werkzeugstück 70 angeordnet und stützt sich gegen das Einsteckende 210 (vgl. Fig. 2) ab, wenn dieses im Werkzeugaufnahmestück 70 befindlich ist.

Auf der Oberseite der Aufnahmehülse 80 angedeutet, ist eine Rändel 81, die die Aufnahmehülse 80 ringförmig umläuft. Dies Erleichtern den einen Wechsel der Diamantbohrkrone.

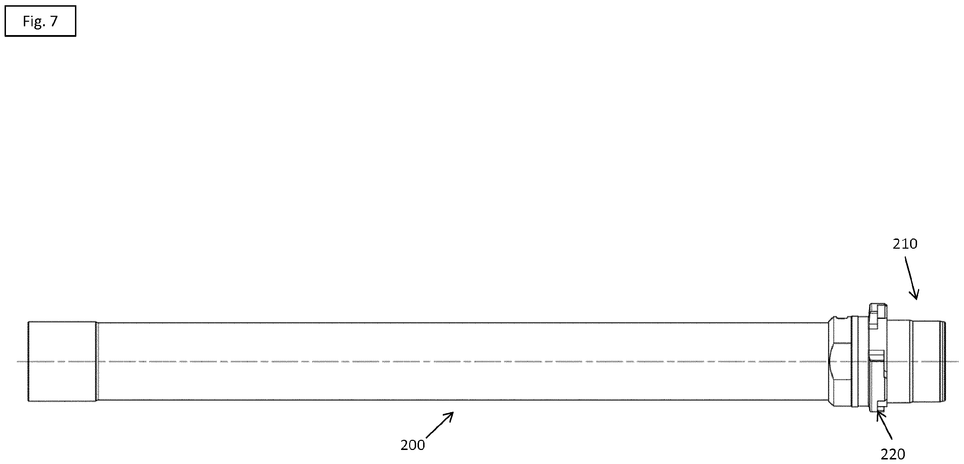

Eine erfindungsgemäße Diamantbohrkrone 200 ist in Fig. 7 dargestellt.

Die Diamantbohrkrone 200 der Fig. 2 weist ein Einsteckende 210 auf, das durch eine zentrale Einstecköffnung 50 (vgl. Fig. 2) hindurch in ein Werkzeugaufnahmestück 70 (vgl. Fig. 1 Werkzeugaufnahmestück 70) eingesteckt werden kann.

Am Einsteckende 210 sind in Umfangsrichtung U, gleichmäßig voneinander beabstandet, genau drei Halteriegel 220 ausgebildet. Von diesen drei Halteriegel 22 sind aufgrund der perspektivischen Darstellung lediglich zwei aus der Fig. 8 ersichtlich.

Die Halteriegel 220 sind zum Eingriff mit Haltelaschen (vgl. Fig. 3 Haltelaschen 55) vorgesehen.

Jeder der Halteriegel 22 weist eine Kontaktfläche 57` auf, die zu einer Anschlagsfläche 57 an den jeweiligen Haltelaschen 55 (vgl. Fig. 2 und 3) korrespondiert. Die Halteriegel 220 weisen eine Gegenauflagefläche 71' auf, deren Flächennormalen jeweils parallel zur Rotationsachse R verläuft. Die gegen Auflageflächen 71' dienen zur Auflage auf den Auflageflächen 71 des Werkzeugaufnahmestücks 70 (vgl. Fig. 1).

Am Einsteckende 210 entlang der Umfangsrichtung U sind drei gleichmäßig voneinander beabstandete Zapfengegenflächen 75' an den Halteriegel 220 ausgebildet. Diese Zapfengegenflächen 75` stehen senkrecht zu den jeweiligen Gegenauflageflächen 71'. Gegenüber einer Umfangsrandfläche 225 (vgl. auch Fig. 8) sind die Zapfengegenflächen 75` in Umfangsrichtung U zurückgesetzt.

Die Zapfengegenflächen 75' bilden einen Anschlag für die Zapfenflächen 75 zwecks formschlüssiger Drehmomentübertragung. Die Kontaktfläche 57`, die aufgrund der Darstellung der Fig. 8 hier rückseitig am Halteriegel 220 angezeichnet sind, sind flächig ausgebildet, so dass diese einen Gleitkontakt zu den korrespondierenden Anschlagflächen 57 an den Haltelaschen 55 bilden, und so zumindest zwischen Aufnahmehülse 80 und Einsteckende 210 bei in Sperrdrehlage SL (vgl. Fig. 1) ein rotatorischer Freiheitsgrad um die Rotationsachse R, zumindest im Bereich der Anschlagflächen 57 zwischen Aufnahmehülse 18 und Einsteckende 210 ungesichert bleibt.

Fig. 1 zeigt schematisch ein elektrisches Handkernbohrgerät 100 mit einem hier lediglich schematisch dargestellten Gehäuse 99 an dem die Werkzeugaufnahme 90 angeordnet ist. Die Werkzeugaufnahme 90 der Fig. 3 entspricht, abgesehen von einer anderen Schnittdarstellung, der Werkzeugaufnahme 90 der Fig. 1. Daher soll im Folgenden im Wesentlichen auf einzelne Details eingegangen werden.

Unten links in Fig. 1 im Schnitt gut zu erkennen, ist eine Haltelasche 55, die eine formschlüssige Auszugssicherung für ein Einsteckende 210 bietet. Die Anschlagfläche 57 ist flächig und vorliegend leicht gekrümmt ausgebildet, so dass diese einen Gleitkontakt zu den korrespondierenden Kontaktflächen 57` bilden kann.

Die Diamantbohrkrone 200 wird in die Werkzeugaufnahme 90 aufgenommen. Die korrespondierende Kontaktfläche 57' liegt an der Anschlagsfläche 57 des Haltearms 55 an, so dass das Einsteckende 210 Axialauszugs gesichert ist. Dementsprechend ist aus Fig. 1 auch die Sperrdrehlage SL des Einstiegsendes 210 bezüglich der Werkzeugaufnahme 90 bzw. der Hülse 80 erkennbar.

Zurück zu Fig. 2, in der die erfindungsgemäß vorgesehene Zapfenfläche 75 gut erkennbar ist.

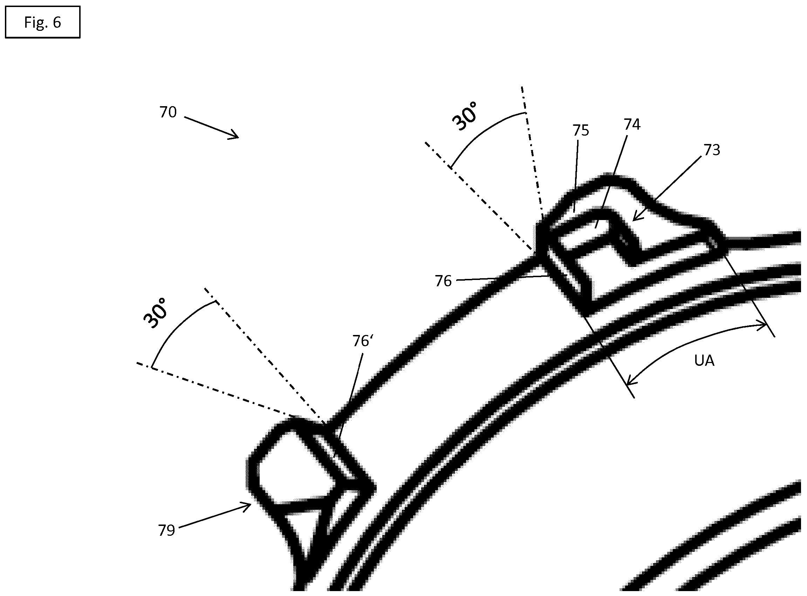

Der am Werkzeugaufnahmestück 70 ausgebildete Zapfen 73 weist eine sich in radialer Richtung RR erstreckende Seitenwand 76 auf, die um 30° zur Rotationsachse geneigt ist (vgl. Fig. 6).

Oberhalb dieser Seitenwand 76 erstreckt sich die Zapfenfläche 75, deren Flächennormale senkrecht zur Rotationsachse R und tangential zur Umfangsrichtung steht. Gut zu erkennen ist, dass die Zapfenfläche 75 in radialer Richtung RR höchstens halb so breit erstreckt wie eine jeweilige Auflagefläche 71 in radialer Richtung RR. Zudem erstreckt sich die Zapfenfläche 75 in radialer Richtung höchstens halb so breit wie die geneigte Seitenwand 76.

In Fig. 1 ist ein Teil der Aufnahmehülse 80 freigestellt, um die Paarung zwischen Einsteckende 210 und dem Werkzeugaufnahmestück 70 besser darzustellen. Bei dem Ausführungsbeispiel der Fig. 1 handelt es sich um die gleiche Werkzeugaufnahme 90, die bereits mit Bezug auf die Fig. 2, 3 und 4 erläutert wurde.

Die Zapfengegenflächen 75' liegen an der Zapfenfläche 75 an, wobei beide Flächennormalen senkrecht zur Rotationsachse R stehen, so dass wenn das Werkzeugaufnahmestück 70 bzw. die Werkzeugaufnahme 90 in Betriebsdrehrichtung BR gedreht wird, eine formschlüssige Drehmomentübertragung vom Werkzeugaufnahmestück 70 auf das Einsteckende 210 der Diamantbohrkrone 200 erfolgen kann.

Insbesondere ist in Fig. 5 verdeutlicht, dass sich jede der drei Zapfenflächen 75 in radialer Richtung RR höchstens halb so breit erstreckt, wie eine jeweilige Auflagefläche 71 in radialer Richtung RR.

Die Zapfen 73 weisen jeweils ein Plateau 77 auf, das von der Auflagefläche 71 beabstandet und dessen jeweilige Fläche mal parallel zur Rotationsachse R orientiert ist. Eine jeweilige Zapfenfläche 75 steht senkrecht zu dem jeweiligen Plateau 77 unbegrenzt eine Zapfenspitze 74, die sich ausgehend vom Plateau 77 in Richtung der jeweiligen Haltelasche 55 erstreckt.

Die Zapfenspitze 74 erstreckt sich entlang eines der Rotationsachse R am nächsten gelegenen Umfangsabschnitts UA des Zapfens 73 über wenigstens ein Drittel und höchstens zwei Drittel des Plateaus 77. Jede der drei Zapfenflächen 75 erstreckt sich in radialer Richtung RR höchstens halb so breit wie ein jeweiliges Plateau 77 in radialer Richtung RR.

Ein Seitenrand 76 des Zapfens 73 und eine Seitenwand 76' des Vorlaufzapfens 79 sind jeweils um 30° zur Rotationsachse R geneigt, dies ist am Vorlaufzapfen 79 oben links sowie am Zapfen 73 oben links exemplarisch gezeigt.

Fig. 9 zeigt schließlich eine Diamantbohrkrone 200 mit Einsteckende 210. Die Darstellung der Fig. 9 zeigt das gleiche Ausführungsbeispiel wir Fig. 1. Insbesondere gut zu erkennen ist, dass die korrespondierenden Kontaktflächen 57' am Einsteckende flächig ausgebildet sind, d.h. ohne etwaige Rastmittel. Die Kontaktflächen 57' sind an dem Halteriegeln 220 ausgebildet.

Jeder der Halteriegel 220 weist eine Gegenauflagefläche 71' auf, deren Flächennormalen jeweils parallel zur Rotationsachse verlaufen. Am Einsteckende 210 sind entlang der Umfangsrichtung U3 gleichmäßig voneinander beabstandete Zapfengegenflächen 75' an den jeweiligen Halteriegel 220 ausgebildet. Die Zapfengegenflächen 75' stehen senkrecht zu den jeweiligen Gegenauflageflächen 71'

Die Zapfengegenflächen 75' sind gegenüber einer Umfangsrandfläche 225 des Halteriegels 220 zurückgesetzt.

### Bezugszeichenliste

- 20: Dichtring
- 50: zentrale Einstecköffnung
- 55: Haltelasche
- 57: Anschlagsfläche
- 57': Kontaktfläche
- 60: Druckfederanordnung
- 70: Werkzeugaufnahmestück
- 71: Auflagefläche
- 71': Gegenauflagefläche
- 73: Zapfen
- 74: Zapfenspitze
- 75: Zapfenfläche
- 75`: Zapfengegenflächen
- 76: Seitenwand des Zapfens
- 76': Seitenwand des Vorlaufzapfens
- 77: Plateau
- 78: Stützkragen
- 79: Vorlaufzapfen
- 80: Aufnahmehülse
- 81: Rändel
- 85: Hülsenrand
- 90: Werkzeugaufnahme
- 99: Gehäuse
- 100: elektrisches Handkernbohrgerät
- 200: Diamantbohrkrone
- 210: Einsteckende
- 220: Halteriegel
- 225: Umfangsrandfläche
- BR: Betriebsdrehrichtung
- R: Rotationsachse
- SL: Sperrdrehlage
- UA: Umfangsabschnitt
- UR: Umfangsrichtung
- UW: Umfang des Werkzeugaufnahmestücks

## Patentansprüche

1. Elektrisches Handkernbohrgerät (100) mit einer Werkzeugaufnahme (90) zur Aufnahme einer Diamantbohrkrone (200), wobei die Werkzeugaufnahme (90) eine Aufnahmehülse (80) und ein darin angeordnetes Werkzeugaufnahmestück (70) aufweist, das beim Betrieb des Handkernbohrgeräts (100) um eine Rotationsachse (R) in Betriebsdrehrichtung (BR) angetrieben wird, und mit einer Druckfederanordnung (60), die innerhalb der Aufnahmehülse (80) angeordnet ist und die die Aufnahmehülse (80) und das Werkzeugaufnahmestück (70) federnd gegeneinander abstützt, wobei die Aufnahmehülse (80) eine zentrale Einstecköffnung (50) aufweist, durch die hindurch ein Einsteckende (210) der Diamantbohrkrone (200) in das Werkzeugaufnahmestück (70) eingeführt werden kann, wenn das Einsteckende (210) bezüglich der Einstecköffnung (50) in einer Einsteckdrehlage befindlich und die Druckfederanordnung (60) druckbelastet ist, und in der das Einsteckende (210) gegen ein Herausziehen koaxial zur Rotationsachse (R) gesichert ist, wenn das Einsteckende (210) in dem Werkzeugaufnahmestück (70) und bezüglich der Einstecköffnung (50) in einer Sperrdrehlage (SL) befindlich ist und die Druckfederanordnung (60) vergleichsweise weniger druckbelastet ist, wobei an der Aufnahmehülse (80) entlang einer Umfangsrichtung (UR) der Einstecköffnung (50) genau drei gleichmäßig voneinander beabstandete Haltelaschen (55) ausgebildet sind, die jeweils eine Anschlagfläche (57) aufweisen, die jeweils dem Werkzeugaufnahmestück (70) zugewandt sind, wobei das Einsteckende (210), wenn dieses gegen ein Herausziehen koaxial zur Rotationsachse (R) gesichert ist, mittels dreier am Einsteckende (210) ausgebildeten Kontaktflächen (57`) an den Anschlagflächen (57) anliegt, wobei entlang eines Umfangs (UVη des Werkzeugaufnahmestücks (70) genau drei gleichmäßig voneinander beabstandete Auflageflächen (71) am Werkzeugaufnahmestück (70) ausgebildet sind, die jeweils den Anschlagflächen (57) zugewandt sind, wobei die Auflageflächen (71) ihrerseits einen, bezogen auf die Anschlagflächen (57), gegensinnig orientierten axialen Anschlag für das in Sperrdrehlage (SL) befindliche Einsteckende (210) der Diamantbohrkrone (200) mittels am Einsteckende (210) ausgebildeter Gegenauflageflächen (71') bilden, wobei von den Auflageflächen (71), die Auflageflächen (71) jeweils einseitig begrenzend, genau drei gleichmäßig voneinander beabstandete Zapfen (73) abragen, an denen jeweils eine Zapfenfläche (75) ausgebildet ist, deren jeweilige Flächennormale senkrecht zur Rotationsachse (R) und tangential zum Umfang (UVη orientiert ist, so dass eine Drehmomentübertragung in Betriebsdrehrichtung (BR) vom Werkzeugaufnahmestück (70) auf das Einsteckende (210), wenn dieses in Sperrdrehlage (SL) befindlich und die Druckfederanordnung (60) vergleichsweise weniger druckbelastet ist, ausschließlich durch Formschluss zwischen den drei Zapfenflächen (75) und dazu korrespondierenden Zapfengegenflächen (75') am Einsteckende (210) erfolgt, wobei sich jede der drei Zapfenflächen (75) in radialer Richtung (RR) höchstens halb so breit erstreckt wie eine jeweilige Auflagefläche (71) in radialer Richtung (RR), wobei die Zapfen (73) jeweils ein Plateau (77) aufweisen, das von der Auflagefläche (71) beabstandet und dessen jeweilige Flächennormale parallel zur Rotationsachse (R) orientiert ist, **dadurch gekennzeichnet, dass** die Anschlagflächen (57) flächig ausgebildet sind, so dass diese einen Gleitkontakt zu den korrespondierenden Kontaktflächen (57') am Einsteckende (210) bilden und somit, zumindest im Bereich der Anschlagflächen (57) zwischen Aufnahmehülse (80) und Einsteckende (210) bei in Sperrdrehlage (SL) befindlichem Einsteckende (210), ein rotatorischer Freiheitsgrad um die Rotationsachse (R) ungesichert verbleibt und eine jeweilige Zapfenfläche (75) senkrecht zu dem jeweiligen Plateau (77) steht und eine Zapfenspitze (74) begrenzt, die sich ausgehend vom Plateau (77) Richtung der jeweiligen Haltelasche (55) erstreckt.

2. Handkernbohrgerät (100) nach Anspruch 1,
**dadurch gekennzeichnet, dass** sich die Zapfenspitze (74), entlang eines der Rotationsachse (R) am nächsten gelegenen Umfangsabschnitts (UA) des Zapfens (73), über wenigstens 1/3 und höchstens 2/3 des Plateaus (77) erstreckt.

3. Handkernbohrgerät (100) nach Anspruch 2,
**dadurch gekennzeichnet, dass** sich ein jeweiliger jede der drei Zapfenflächen (75) in radialer Richtung (RR) höchstens halb so breit erstreckt wie ein jeweiliges Plateau (77) in radialer Richtung (RR).

4. Handkernbohrgerät (100) nach einem der Ansprüche 2 oder 3,
**dadurch gekennzeichnet, dass** eine sich in radialer Richtung (RR) erstreckende Seitenwand (76) eines jeweiligen Zapfens (73), die sich zwischen einem jeweiligen Plateau (77) und einer jeweiligen Auflagefläche (71), erstreckt um 30 Grad zur Rotationsachse (R) geneigt ist.

5. Handkernbohrgerät (100) nach einem der vorangehenden Ansprüche,
**dadurch gekennzeichnet, dass** die Druckfederanordnung (60), wenn das Einsteckende (210) in dem Werkzeugaufnahmestück (70) und bezüglich der Einstecköffnung (50) in einer Sperrdrehlage (SL) befindlich ist und die Druckfederanordnung (60) vergleichsweise weniger druckbelastet ist, eine Federkraft zwischen 300 Newton und 340 Newton, vorzugsweise 320 Newton, auf das Werkzeugaufnahmestück (70) ausübt.

6. Handkernbohrgerät (100) nach Anspruch 5,
**dadurch gekennzeichnet, dass** die Druckfederanordnung (60) aus fünf in Reihe geschalteten Tellerfedern besteht.

7. Handkernbohrgerät (100) nach einem der vorangehenden Ansprüche,
**dadurch gekennzeichnet, dass** die Werkzeugaufnahme (90) einen Dichtring (20) bestehend aus einem elastisch verformbaren Kunststoff mit einer Shore-Härte kleiner 25 aufweist, wobei der Dichtring (20) innerhalb des Werkzeugaufnahmestücks (70) angeordnet ist und sich gegen das Einsteckende (210) abstützt, wenn dieses im Werkzeugaufnahmestück (70) befindlich ist.

8. Handkernbohrgerät (100) nach einem der vorangehenden Ansprüche,
**dadurch gekennzeichnet, dass** an einer äußeren Oberfläche der Aufnahmehülse (80) ein Rändel (81) ausgebildet ist, dass die Aufnahmehülse (80) ringförmig umläuft.

9. Diamantbohrkrone (200), für ein elektrisches Handkernbohrgerät (100) nach einem der vorangehenden Ansprüche, mit einem Einsteckende (210), das durch eine zentrale Einstecköffnung (50) hindurch in ein Werkzeugaufnahmestück (70) des Handkernbohrgeräts (100) eingesteckt werden kann, wobei am Einsteckende (210), in Umfangsrichtung (U) gleichmäßig voneinander beabstandet, genau drei Halteriegel (220) ausgebildet sind, die zum Eingriff mit Haltelaschen (55) vorgesehen sind, die an einer das Werkzeugaufnahmestück (70) umschließenden Aufnahmehülse (80) ausgebildet sind, wobei die Halteriegel (220) jeweils eine Kontaktfläche (57') aufweisen, die zu einer Anschlagfläche (57) an den jeweiligen Haltelaschen (55) korrespondiert, wobei jeder der Halteriegel (220) eine Gegenauflagefläche (71') aufweist, deren Flächennormalen jeweils parallel zur Rotationsachse (R) verlaufen und wobei am Einsteckende (210) entlang der Umfangsrichtung (U) drei gleichmäßig voneinander beabstandete Zapfengegenflächen (75') ausgebildet sind, die senkrecht zu den jeweiligen Gegenauflageflächen (71') verlaufen und die gegenüber einer Umfangsrandfläche (225) des Halteriegels (220) zurückgesetzt sind, wobei die Kontaktflächen (57`) flächig ausgebildet sind, so dass diese einen Gleitkontakt zu den korrespondierenden Anschlagflächen (57) an den Haltelaschen (55) bilden und somit, zumindest im Bereich der Kontaktflächen (57') zwischen Aufnahmehülse (80) und Einsteckende (210) bei in Sperrdrehlage (SL) befindlichem Einsteckende (210), ein rotatorischer Freiheitsgrad um die Rotationsachse (R) ungesichert verbleibt, wobei die Haltelaschen (55) so ausgebildet sind, dass sie drei gleichmäßig voneinander beabstandeten Zapfen (73) gegenüberliegen, die von Auflageflächen (71) des Werkzeugaufnahmestücks (70) abragen, wobei die Zapfen (73) jeweils ein Plateau (77) aufweisen, das von der Auflagefläche (71) beabstandet und dessen jeweilige Flächennormale parallel zur Rotationsachse (R) orientiert ist, **dadurch gekennzeichnet, dass** die Anschlagflächen (57) flächig ausgebildet sind, so dass diese einen Gleitkontakt zu den korrespondierenden Kontaktflächen (57') am Einsteckende (210) bilden und somit, zumindest im Bereich der Anschlagflächen (57) zwischen Aufnahmehülse (80) und Einsteckende (210) bei in Sperrdrehlage (SL) befindlichem Einsteckende (210), ein rotatorischer Freiheitsgrad um die Rotationsachse (R) ungesichert verbleibt und wobei eine jeweilige Zapfenfläche (75) senkrecht zu dem jeweiligen Plateau (77) steht und eine Zapfenspitze (74) begrenzt, die sich ausgehend vom Plateau (77) Richtung der jeweiligen Haltelasche (55) erstreckt.

10. Handkernbohrsystem mit einem elektrischen Handkernbohrgerät (100) nach einem der Ansprüche 1 bis 8 und einer Diamantbohrkrone (200) nach Anspruch 9.

## Claims

1. Electric hand-held core drill (100) having a tool fitting (90) for receiving a diamond core bit (200), wherein the tool fitting (90) has a receiving sleeve (80) and a tool fitting piece (70) arranged therein, which is driven in operation direction of rotation (BR) about an axis of rotation (R) during operation of the hand-held core drill (100), and having a compression spring arrangement (60) which is arranged within the receiving sleeve (80) and which supports the receiving sleeve (80) and the tool fitting piece (70) resiliently with respect to one another, wherein the receiving sleeve (80) has a central insertion opening (50) through which a shank (210) of the diamond core bit (200) can be introduced into the tool fitting piece (70) when the shank (210) is located in an insertion rotational position with respect to the insertion opening (50) and the compression spring arrangement (60) is under compressive load, and in which the shank (210) is secured against being pulled out coaxially with the axis of rotation (R) when the shank (210) is located in the tool fitting piece (70) and is in a blocking rotational position (SL) with respect to the insertion opening (50) and the compression spring arrangement (60) is under comparatively less compressive load, wherein exactly three uniformly spaced-apart retaining tabs (55) are formed on the receiving sleeve (80) along a circumferential direction (UR) of the insertion opening (50), said retaining tabs (55) each having a stop surface (57) which respectively faces the tool fitting piece (70), wherein the shank (210), when it is secured against being pulled out coaxially with the axis of rotation (R), bears against the stop faces (57) by means of three contact faces (57') formed on the shank (210), wherein exactly three uniformly spaced-apart bearing faces (71) are formed on the tool fitting piece (70) along a circumference (UW) of the tool fitting piece (70), said bearing faces each facing the stop faces (57), wherein the bearing faces (71) for their part form an axial stop, oriented in the opposite direction with respect to the stop faces (57), for the shank (210), located in the blocking rotational position (SL), of the diamond core bit (200) by means of mating bearing faces (71') formed on the shank (210), wherein exactly three uniformly spaced-apart pegs (73) project from the bearing faces (71), each delimiting the bearing faces (71) on one side, with a peg face (75) being formed on each peg (73), the respective surface normal of which is oriented perpendicularly to the axis of rotation (R) and at a tangent to the circumference (UVη, such that torque transmission in the operation direction of rotation (BR) from the tool fitting piece (70) to the shank (210), when the latter is located in the blocking rotational position (SL) and the compression spring arrangement (60) is under comparatively less compressive load, takes place only by way of a form fit between the three peg faces (75) and peg mating faces (75'), corresponding thereto, on the shank (210), wherein each of the three peg faces (75) is at most half as wide in the radial direction (RR) as a respective bearing face (71) in the radial direction (RR), wherein the pegs (73) each have a plateau (77) which is spaced apart from the bearing face (71) and the respective surface normal of which is oriented parallel to the axis of rotation (R), **characterized in that** the stop faces (57) are planar such that they form a sliding contact with the corresponding contact faces (57') on the shank (210) and thus, at least in the region of the stop faces (57) between the receiving sleeve (80) and shank (210), with the shank (210) located in the blocking rotational position (SL), a degree of rotational freedom about the axis of rotation (R) remains unsecured and a respective peg face (75) is perpendicular to the respective plateau (77) and delimits a peg tip (74) which extends from the plateau (77) in the direction of the respective retaining tab (55).

2. Hand-held core drill (100) according to Claim 1,
**characterized in that** the peg tip (74), along a circumferential portion (UA), located closest to the axis of rotation (R), of the peg (73), extends over at least 1/3 and at most 2/3 of the plateau (77).

3. Hand-held core drill (100) according to Claim 2,
**characterized in that** each one of the three peg faces (75) is at most half as wide in the radial direction (RR) as a respective plateau (77) in the radial direction (RR).

4. Hand-held core drill (100) according to either of Claims 2 and 3,
**characterized in that** a side wall (76), extending in the radial direction (RR), of each peg (73), said side wall (76) extending between a respective plateau (77) and a respective bearing face (71), is inclined through 30 degrees with respect to the axis of rotation (R).

5. Hand-held core drill (100) according to one of the preceding claims,
**characterized in that** the compression spring arrangement (60), when the shank (210) is located in the tool fitting piece (70) and in a blocking rotational position (SL) with respect to the insertion opening (50) and the compression spring arrangement (60) is under comparatively less compressive load, exerts a spring force of between 300 newtons and 340 newtons, preferably 320 newtons, on the tool fitting piece (70).

6. Hand-held core drill (100) according to Claim 5,
**characterized in that** the compression spring arrangement (60) consists of five cup springs connected in series.

7. Hand-held core drill (100) according to one of the preceding claims,
**characterized in that** the tool fitting (90) has a sealing ring (20) consisting of an elastically deformable plastic with a Shore hardness of less than 25, wherein the sealing ring (20) is arranged within the tool fitting piece (70) and is supported against the shank (210) when the latter is located in the tool fitting piece (70).

8. Hand-held core drill (100) according to one of the preceding claims,
**characterized in that** a knurl (81) is formed on an outer surface of the receiving sleeve (80), said knurl annularly encircling the receiving sleeve (80).

9. Diamond core bit (200) for an electric hand-held core drill (100) according to one of the preceding claims, having a shank (210) which can be inserted through a central insertion opening (50) into a tool fitting piece (70) of the hand-held core drill (100), wherein exactly three retaining bars (220) are formed, uniformly spaced apart from one another in the circumferential direction (U), on the shank (210), said retaining bars (220) being intended to engage with retaining tabs (55) which are formed on a receiving sleeve (80) enclosing the tool receiving piece (70), wherein the retaining bars (220) each have a contact face (57') which corresponds to a stop face (57) on the respective retaining tabs (55), wherein each of the retaining bars (220) has a mating bearing face (71'), the surface normals of which each extend parallel to the axis of rotation (R), and wherein three uniformly spaced-apart peg mating faces (75') are formed on the shank (210) along the circumferential direction (U), said peg mating faces (75') extending perpendicularly to the respective mating bearing faces (71') and being set back with respect to the circumferential peripheral face (225) of the retaining bar (220), wherein the contact faces (57') are planar such that they form a sliding contact with the corresponding stop faces (57) on the retaining tabs (55) and thus, at least in the region of the contact faces (57') between the receiving sleeve (80) and the shank (210), with the shank (210) located in the blocking rotational position (SL), a degree of rotational freedom about the axis of rotation (R) remains unsecured, wherein the retaining tabs (55) are formed such that they are located opposite three uniformly spaced-apart pegs (73) which project from bearing faces (71) of the tool fitting piece (70), wherein the pegs (73) each have a plateau (77) which is spaced apart from the bearing face (71) and the respective surface normal of which is oriented parallel to the axis of rotation (R), **characterized in that** the stop faces (57) are planar such that they form a sliding contact with the corresponding contact faces (57') on the shank (210) and thus, at least in the region of the stop faces (57) between the receiving sleeve (80) and shank (210), with the shank (210) located in the blocking rotational position (SL), a degree of rotational freedom about the axis of rotation (R) remains unsecured, and wherein a respective peg face (75) is perpendicular to the respective plateau (77) and delimits a peg tip (74) which extends from the plateau (77) in the direction of the respective retaining tab (55).

10. Hand-held core drilling system having an electric hand-held core drill (100) according to one of Claims 1 to 8 and a diamond core bit (200) according to Claim 9.

## Revendications

1. Outil de carottage portatif électrique (100), comprenant un logement d'outil (90) pour recevoir une couronne de forage diamantée (200), dans lequel le logement d'outil (90) présente une douille de logement (80) et une partie de logement d'outil (70) disposée dans celle-ci et entraînée autour d'un axe de rotation (R) dans la direction de rotation de fonctionnement (BR) en cours de fonctionnement de l'outil de carottage portatif (100), et comprenant un ensemble de ressorts de compression (60) qui est disposé à l'intérieur de la douille de logement (80) et qui soutient la douille de logement (80) et la partie de logement d'outil (70) de manière élastique l'une contre l'autre, dans lequel la douille de logement (80) présente une ouverture d'insertion centrale (50) à travers laquelle une extrémité d'insertion (210) de la couronne de forage diamantée (200) peut être introduite dans la partie de logement d'outil (70) lorsque l'extrémité d'insertion (210) se trouve dans une position de rotation d'insertion par rapport à l'ouverture d'insertion (50) et l'ensemble de ressorts de compression (60) est chargé en pression, et dans laquelle l'extrémité d'insertion (210) est protégée contre toute extraction coaxiale par rapport à l'axe de rotation (R) lorsque l'extrémité d'insertion (210) se trouve dans la partie de logement d'outil (70) et dans une position de rotation de blocage (SL) par rapport à l'ouverture d'insertion (50), et l'ensemble de ressorts de compression (60) est relativement moins chargé en pression, dans lequel, sur la douille de logement (80), le long d'une direction circonférentielle (UR) de l'ouverture d'insertion (50) sont réalisées exactement trois pattes de maintien (55) espacées régulièrement les unes des autres et qui présentent respectivement une surface de butée (57) qui est tournée respectivement vers la partie de logement d'outil (70), dans lequel l'extrémité d'insertion (210), lorsqu'elle est protégée contre toute extraction coaxiale par rapport à l'axe de rotation (R), est adjacente aux surfaces de butée (57) au moyen de trois surfaces de contact (57') réalisées à l'extrémité d'insertion (210), dans lequel, le long d'une circonférence (UW) de la partie de logement d'outil (70), au niveau de la partie de logement d'outil (70) sont réalisées exactement trois surfaces d'appui (71) espacées régulièrement les unes des autres qui sont tournées respectivement vers les surfaces de butée (57), dans lequel les surfaces d'appui (71) forment pour leur part une butée axiale, orientée à l'opposé par rapport aux surfaces de butée (57), pour l'extrémité d'insertion (210) se trouvant dans la position de rotation de blocage (SL) de la couronne de forage diamantée (200) au moyen de contre-surfaces d'appui (71') réalisées à l'extrémité d'insertion (210), dans lequel, à partir des surfaces d'appui (71), exactement trois tenons (73) espacés régulièrement les uns des autres font saillie en limitant les surfaces d'appui (71) respectivement d'un côté, tenons sur lesquels est réalisée respectivement une surface de tenon (75) dont la normale à la surface est orientée perpendiculairement à l'axe de rotation (R) et tangentiellement à la circonférence (UW) de sorte qu'une transmission de couple dans la direction de rotation de fonctionnement (BR) de la partie de logement d'outil (70) à l'extrémité d'insertion (210) a lieu si celle-ci se trouve dans la position de rotation de blocage (SL) et l'ensemble de ressorts de compression (60) est relativement moins chargé en pression, uniquement par complémentarité de forme entre les trois surfaces de tenon (75) et des contre-surfaces de tenon (75') correspondant à celles-ci à l'extrémité d'insertion (210), dans lequel chacune des trois surfaces de tenon (75) s'étend dans la direction radiale (RR) au maximum sur la moitié de la largeur d'une surface d'appui respective (71) dans la direction radiale (RR), dans lequel les tenons (73) présentent respectivement un plateau (77) qui est espacé de la surface d'appui (71) et dont la normale à la surface respective est orientée en parallèle à l'axe de rotation (R),
**caractérisé en ce que** les surfaces de butée (57) sont réalisées de manière plane de façon à former un contact coulissant avec les surfaces de contact correspondantes (57') au niveau de l'extrémité d'insertion (210) et qu'il reste de ce fait au moins dans la zone des surfaces de butée (57) entre la douille de logement (80) et l'extrémité d'insertion (210), lorsque l'extrémité d'insertion (210) se trouve dans la position de rotation de blocage (SL), un degré de liberté en rotation autour de l'axe de rotation (R) non sécurisé, et une surface de tenon respective (75) est perpendiculaire au plateau (77) respectif et limite une pointe de tenon (74) qui s'étend en partant du plateau (77) en direction de la patte de maintien (55) respective.

2. Outil de carottage portatif (100) selon la revendication 1, **caractérisé en ce que** la pointe de tenon (74) s'étend le long d'une section circonférentielle (UA) du tenon (73), située le plus près de l'axe de rotation (R), sur au moins 1/3 et au plus 2/3 du plateau (77).

3. Outil de carottage portatif (100) selon la revendication 2, **caractérisé en ce que** chacune des trois surfaces de tenon (75) s'étend dans la direction radiale (RR) au plus sur la moitié de la largeur sur laquelle s'étend un plateau (77) respectif dans la direction radiale (RR).

4. Outil de carottage portatif (100) selon l'une quelconque des revendications 2 ou 3, **caractérisé en ce qu'**une paroi latérale (76) s'étendant dans la direction radiale (RR) d'un tenon (73) respectif qui s'étend entre un plateau (77) respectif et une surface d'appui (71) respective est inclinée de 30 degrés par rapport à l'axe de rotation (R).

5. Outil de carottage portatif (100) selon l'une quelconque des revendications précédentes, **caractérisé en ce que**, quand l'extrémité d'insertion (210) se trouve dans la partie de logement d'outil (70) et dans une position de rotation de blocage (SL) par rapport à l'ouverture d'insertion (50), et l'ensemble de ressorts de compression (60) est relativement moins chargé en pression, l'ensemble de ressorts de compression (60) exerce une force de ressort comprise entre 300 Newton et 340 Newton, de préférence de 320 Newton, sur la partie de logement d'outil (70).

6. Outil de carottage portatif (100) selon la revendication 5, **caractérisé en ce que** l'ensemble de ressorts de compression (60) est composé de cinq ressorts à disques montés en série.

7. Outil de carottage portatif (100) selon l'une quelconque des revendications précédentes, **caractérisé en ce que** le logement d'outil (90) présente une bague d'étanchéité (20) composée d'une matière plastique à déformation élastique d'une dureté Shore inférieure à 25, dans lequel la bague d'étanchéité (20) est disposée à l'intérieur de la partie de logement d'outil (70) et prend appui sur l'extrémité d'insertion (210) lorsque celle-ci se trouve dans la partie de logement d'outil (70).

8. Outil de carottage portatif (100) selon l'une quelconque des revendications précédentes, **caractérisé en ce que** sur une surface extérieure de la douille de logement (80) est réalisée une molette (81) qui entoure la douille de logement (80) de manière annulaire.

9. Couronne de forage diamantée (200) pour un outil de carottage portatif électrique (100) selon l'une quelconque des revendications précédentes, comprenant une extrémité d'insertion (210) qui peut être insérée à travers une ouverture d'insertion centrale (50) dans une partie de logement d'outil (70) de l'outil de carottage portatif (100), dans lequel à l'extrémité d'insertion (210), de manière régulièrement espacée les uns des autres dans la direction circonférentielle (U), exactement trois verrous de maintien (220) sont réalisés qui sont prévus pour venir en prise avec des pattes de maintien (55) qui sont réalisées sur une douille de logement (80) entourant la partie de logement d'outil (70), dans lequel les verrous de maintien (220) présentent respectivement une surface de contact (57') qui correspond à une surface de butée (57) sur les pattes de maintien (55) respectives, dans lequel chacun des verrous de maintien (220) présente une contre-surface d'appui (71') dont la normale à la surface s'étend respectivement en parallèle à l'axe de rotation (R), et dans lequel à l'extrémité d'insertion (210), le long de la direction circonférentielle (U) sont réalisées trois contre-surfaces de tenon (75') espacées régulièrement les unes des autres, qui s'étendent perpendiculairement aux contre-surfaces d'appui (71') respectives, et qui sont en retrait par rapport à une surface de bord circonférentiel (225) du verrou de maintien (220), dans lequel les surfaces de contact (57') sont réalisées de manière plane de façon à former un contact coulissant avec les surfaces de butée (57) correspondantes sur les pattes de maintien (55), et de ce fait au moins dans la zone des surfaces de contact (57') entre la douille de logement (80) et l'extrémité d'insertion (210), lorsque l'extrémité d'insertion (210) se trouve dans la position de rotation de blocage (SL), un degré de liberté en rotation autour de l'axe de rotation (R) reste non sécurisé, dans lequel les pattes de maintien (55) sont réalisées de façon à être opposées à trois tenons (73), régulièrement espacés les uns des autres, qui font saillie à partir des surfaces d'appui (71) de la partie de logement d'outil (70), dans lequel les tenons (73) présentent respectivement un plateau (77) qui est espacé de la surface d'appui (71) et dont la normale à la surface respective est orientée en parallèle à l'axe de rotation (R),
**caractérisé en ce que** les surfaces de butée (57) sont réalisées de manière plane de façon à former un contact coulissant avec les surfaces de contact (57') correspondantes au niveau de l'extrémité d'insertion (210) et qu'il reste donc au moins dans la zone des surfaces de butée (57) entre la douille de logement (80) et l'extrémité d'insertion (210), lorsque l'extrémité d'insertion (210) se trouve dans la position de rotation de blocage (SL), un degré de liberté en rotation autour de l'axe de rotation (R) non sécurisé, et dans lequel une surface de tenon (75) respective est perpendiculaire au plateau (77) respectif et limite une pointe de tenon (74) qui s'étend en partant du plateau (77) en direction de la patte de maintien (55) respective.

10. Système de carottage portatif comprenant un outil de carottage portatif électrique (100) selon l'une quelconque des revendications 1 à 8 et une couronne de forage diamantée (200) selon la revendication 9.
